# EUROPEAN PATENT APPLICATION

(11) **EP 4 729 480 A1**
(43) Date of publication of application: **22.04.2026**
(21) Application number: 24823687.9
(22) Date of filing: 12.06.2024
(51) Int. Cl.: C01B 32/90

(54) **LOW-OXYGEN VANADIUM ALUMINUM CARBIDE MAX AND MANUFACTURING METHOD THEREFOR**

(30) Priority: 13.06.2023 KR 20230075311
(71) Applicant: KOREA INSTITUTE OF GEOSCIENCE AND MINERAL RESOURCES, Yuseong-gu Daejeon 34132 (KR)
(72) Inventor: PARK, Tae-Jun, Daejeon 34386 (KR); KIM, Sun-Kyung, Daejeon 34061 (KR); ROH, Ki-Min, Daejeon 34061 (KR); KWON, Han-Jung, Jeonju-si Jeonbuk-do 54969 (KR)
(74) Representative: Witte, Weller & Partner Patentanwälte mbB
(86) International application number: PCT/KR2024/008031
(87) International publication number: WO 2024/258169

(57) **Abstract**

The present invention provides low-oxygen vanadium aluminum carbide (V₂AlC) MAX for producing high-purity vanadium MXene, and a manufacturing method therefor.

## Description

### [Technical Field]

The present disclosure relates to low-oxygen vanadium aluminum carbide (V₂AlC) MAX for producing high-purity vanadium MXene, and a manufacturing method therefor.

### [Background Art]

Vanadium metal is a material that readily forms carbides, nitrides, or oxides due to its high affinity with nonmetallic elements such as carbon, nitrogen, or oxygen.

Accordingly, vanadium carbide, which is produced by combining vanadium with carbon, can be relatively easily formed; however, owing to the strong affinity of vanadium for oxygen, it is not easy to synthesize a pure (low-oxygen) carbide.

In particular, because vanadium readily forms oxycarbides of the type V(CₓO₁₋ₓ) where x < 1, the manufacture of low-oxygen vanadium carbide is not easily achieved.

Accordingly, through long-term dedication and extensive research, the present disclosure provides low-oxygen vanadium aluminum carbide MAX, which is formed with reduced oxygen content by using both an inert gas and hydrogen gas in the carbothermal reaction of vanadium and aluminum, and a manufacturing method therefor.

### [Disclosure]

### [Technical Problem]

In order to solve the aforementioned problems, a purpose of the present disclosure is to provide a low-oxygen vanadium aluminum carbide MAX, which is formed with reduced oxygen content by using both an inert gas and hydrogen gas in a carbothermal reaction of vanadium and aluminum.

In addition, another purpose of the present disclosure is to provide a method for manufacturing a low-oxygen vanadium aluminum carbide MAX, which is formed with reduced oxygen content by using both an inert gas and hydrogen gas in a carbothermal reaction of vanadium and aluminum.

In addition, still another purpose of the present disclosure is to provide a use of a low-oxygen vanadium aluminum carbide MAX, which is formed with reduced oxygen content by using both an inert gas and hydrogen gas in a carbothermal reaction of vanadium and aluminum.

Furthermore, still another purpose of the present disclosure is to provide a low-oxygen vanadium aluminum carbide MAX, manufactured by the method for manufacturing the low-oxygen vanadium aluminum carbide MAX, wherein the oxygen content ranges from 10 ppm to 8,000 ppm.

The challenges that the present disclosure is intended to solve are not limited to those mentioned above, and other challenges not mentioned will be apparent to those skilled in the art from the following description.

### [Technical Solution]

In order to achieve the purpose, an aspect of the present disclosure provides a low-oxygen vanadium aluminum carbide MAX, comprising:
vanadium;
aluminum; and
carbon,
wherein the low-oxygen vanadium aluminum carbide MAX is formed by using both an inert gas and hydrogen gas in a carbothermal reaction of the vanadium and the aluminum.

In some exemplary embodiments, the low-oxygen vanadium aluminum carbide MAX may be formed by:
mixing vanadium oxide, an aluminum compound, and a carbon compound to prepare a mixed powder;
subjecting the mixed powder to a sintering heat treatment to prepare a bulk MAX having a large particle size;
comminuting the bulk MAX to prepare a fine powder MAX; and
subjecting the fine powder MAX to a carbothermal reaction heat treatment using both an inert gas and hydrogen gas such that the low-oxygen vanadium aluminum carbide MAX is formed with reduced oxygen content.

In some exemplary embodiments, the oxygen content may range from 10 ppm to 8,000 ppm.

In some exemplary embodiments, the low-oxygen vanadium aluminum carbide MAX may have a chemical formula of V₂AlC.

In some exemplary embodiments, a molar ratio (B/A) of the aluminum compound (B) to the vanadium oxide (A) may range from 0.2 to 10, and
a molar ratio (C/A) of the carbon compound (C) to the vanadium oxide (A) may range from 0.2 to 10.

In some exemplary embodiments, a particle size of the mixed powder of the vanadium oxide, the aluminum compound, and the carbon compound may range from 2 nm to 50 µm.

In some exemplary embodiments, the vanadium oxide may be at least one selected from the group consisting of vanadium pentoxide (V₂O₅), sodium metavanadate (NaVO₃), vanadium trioxide (V₂O₃), vanadium oxychloride (VOCl₃), and ammonium metavanadate (H₄NVO₃).

In some exemplary embodiments, the aluminum compound may be at least one selected from the group consisting of alumina (Al₂O₃), aluminum hydroxide (Al(OH)₃), aluminum chloride (AlCl₃), aluminum fluoride (AlF₃), and aluminum sulfate (Al₂(SO₄)₃).

In some exemplary embodiments, the carbon compound may be at least one selected from the group consisting of industrial carbon powder, coke, coal, coal tar, activated carbon, natural graphite, artificial graphite, carbon black, acetylene black, Ketjen black, channel black, furnace black, lamp black, thermal black, industrial diamond, and carbon fiber.

In some exemplary embodiments, a volume ratio of the inert gas to the hydrogen gas may range from 10:1 to 1:10.

In some exemplary embodiments, a temperature of the sintering heat treatment may range from 800 °C to 1600 °C, and
a time for the sintering heat treatment may range from 10 minutes to 24 hours.

In some exemplary embodiments, a particle size of the bulk MAX may range from 50 nm to 100 µm, and
a particle size of the fine powder MAX may range from 2 nm to 20 µm.

In addition, another aspect of the present disclosure provides a method for manufacturing a low-oxygen vanadium aluminum carbide MAX, comprising the steps of:
(a-1) preparing a mixed powder by mixing vanadium oxide, an aluminum compound, and a carbon compound;
(a-2) preparing a bulk MAX by subjecting the mixed powder to a sintering heat treatment;
(a-3) preparing a fine powder MAX by comminuting the bulk MAX; and
(a-4) preparing a low-oxygen vanadium aluminum carbide MAX with reduced oxygen content by subjecting the fine powder MAX to a carbothermal reaction heat treatment using both an inert gas and hydrogen gas under an atmosphere of air, vacuum, nitrogen, or argon in a high-temperature synthesis furnace or a super kantal furnace.

In some exemplary embodiments, in step (a-1) of preparing a mixed powder by mixing vanadium oxide, an aluminum compound, and a carbon compound,
a mixing ratio of the vanadium oxide, the aluminum compound, and the carbon compound may be 1 : 0.2-0.7 : 0.1-0.5 by weight.

In some exemplary embodiments, in step (a-2) of preparing a bulk MAX by subjecting the mixed powder to a sintering heat treatment,
a temperature of the sintering heat treatment may range from 800 °C to 1600 °C, and
a time for the sintering heat treatment may range from 10 minutes to 24 hours.

In some exemplary embodiments, in step (a-3) of preparing a fine powder MAX by comminuting the bulk MAX,
a particle size of the bulk MAX may range from 50 nm to 100 µm, and
a particle size of the fine powder MAX may range from 2 nm to 20 µm.

In some exemplary embodiments, in step (a-4) of preparing a low-oxygen vanadium aluminum carbide MAX with reduced oxygen content by subjecting the fine powder MAX to a carbothermal reaction heat treatment using both an inert gas and hydrogen gas under an atmosphere of air, vacuum, nitrogen, or argon in a high-temperature synthesis furnace or a super kantal furnace,
a temperature of the carbothermal reaction heat treatment using both the inert gas and the hydrogen gas may range from 500 °C to 1100 °C, and
a time for the carbothermal reaction heat treatment may range from 10 minutes to 24 hours.

In addition, still another aspect of the present disclosure provides the use of the low-oxygen vanadium aluminum carbide MAX,
as a MAX phase precursor, a raw material for cemented carbide, a catalyst, or a semiconductor material.

Furthermore, still another aspect of the present disclosure provides the low-oxygen vanadium aluminum carbide MAX manufactured by the method for manufacturing a low-oxygen vanadium aluminum carbide MAX,
wherein an oxygen content of the low-oxygen vanadium aluminum carbide MAX ranges from 10 ppm to 8,000 ppm.

In addition, still another aspect of the present disclosure provides the use of the low-oxygen vanadium aluminum carbide MAX manufactured by the method for manufacturing a low-oxygen vanadium aluminum carbide MAX,
as a MAX phase precursor, a raw material for cemented carbide, a catalyst, or a semiconductor material.

### [Advantageous Effects]

According to the present disclosure, since a low-oxygen vanadium aluminum carbide MAX is provided, which is formed with reduced oxygen content by using both an inert gas and hydrogen gas in a carbothermal reaction of vanadium and aluminum, the low-oxygen vanadium aluminum carbide MAX has a low oxygen content, a small particle size, excellent physical properties, and can be used in various applications such as a MAX phase precursor, a raw material for cemented carbide, a catalyst, or a semiconductor material.

In addition, the present disclosure provides a method for manufacturing a low-oxygen vanadium aluminum carbide MAX, which is formed with reduced oxygen content by using both an inert gas and hydrogen gas in a carbothermal reaction of vanadium and aluminum, so that the manufacturing process exhibits excellent stability and enables mass production with improved cost-effectiveness.

Furthermore, the present disclosure provides a low-oxygen vanadium aluminum carbide MAX manufactured by the method for manufacturing the low-oxygen vanadium aluminum carbide MAX, wherein an oxygen content ranges from 10 ppm to 8,000 ppm. The low-oxygen vanadium aluminum carbide MAX has a low oxygen content, a small particle size, excellent physical properties, and can be used in various applications such as a MAX phase precursor, a raw material for cemented carbide, a catalyst, or a semiconductor material.

The effects of the present disclosure are not limited to the aforementioned effects and should be understood to include all effects that can be inferred from the configurations of the present disclosure described in the detailed description or the claims.

### [Description of Drawings]

FIG. 1 is a schematic diagram illustrating a method for manufacturing a low-oxygen vanadium aluminum carbide MAX formed with reduced oxygen content by using both an inert gas and hydrogen gas in a carbothermal reaction of vanadium and aluminum according to an exemplary embodiment of the present disclosure.
FIG. 2 is a process flow diagram illustrating a method for manufacturing a low-oxygen vanadium aluminum carbide MAX according to an exemplary embodiment of the present disclosure.
FIG. 3 is a graph showing the DSC (Differential Scanning Calorimetry) analysis result of a 2V + Al + C mixture and the gas injection section according to an exemplary embodiment of the present disclosure.
FIG. 4 is a graph showing the oxygen content of a low-oxygen vanadium aluminum carbide MAX according to an exemplary embodiment of the present disclosure.

### [Mode for Invention]

Hereinafter, exemplary embodiments of the present disclosure will be described in detail with reference to related drawings.

The advantages and features of the present disclosure, and methods of accomplishing those advantages and features, will become apparent upon reference to the exemplary embodiments described in detail with reference to the accompanying drawings.

However, the present disclosure is not limited by the exemplary embodiments disclosed herein, but will be embodied in many and various forms. Therefore, those exemplary embodiments are provided merely to make the present disclosure complete and to give a complete picture of the scope of the present disclosure to one of ordinary skill in the art to which the present disclosure belongs, and the present disclosure shall be defined by the scope of the claims.

Further, hereinafter, in describing the present disclosure, a detailed description of a configuration determined that may unnecessarily obscure the subject matter of the present disclosure, for example, a detailed description of a known technology including the prior art may be omitted.

Hereinafter, exemplary embodiments of the present disclosure will be described in detail.

### Low-oxygen vanadium aluminum carbide MAX

The present disclosure provides a low-oxygen vanadium aluminum carbide MAX that is formed with a reduced oxygen content by using both an inert gas and hydrogen gas in a carbothermal reaction of vanadium and aluminum.

The present disclosure provides a low-oxygen vanadium aluminum carbide MAX, comprising:
vanadium;
aluminum; and
carbon,
wherein the low-oxygen vanadium aluminum carbide MAX is formed by using both an inert gas and hydrogen gas in a carbothermal reaction of the vanadium and the aluminum.

Since the present disclosure provides a low-oxygen vanadium aluminum carbide MAX that is formed with a reduced oxygen content by using both an inert gas and hydrogen gas in a carbothermal reaction of vanadium and aluminum, the low-oxygen vanadium aluminum carbide MAX has a low oxygen content, a small particle size, excellent physical properties, and can be used for various applications such as a MAX phase precursor, a raw material for cemented carbide, a catalyst, or a semiconductor material.

Vanadium metal is a material in which the formation of carbides, nitrides, or oxides is easy due to its high affinity with non-metallic components such as carbon, nitrogen, or oxygen.

Therefore, vanadium carbide, which is manufactured through the bonding of vanadium and carbon, can be considered a compound that can be easily produced. However, due to the high affinity of vanadium for oxygen, it is not easy to synthesize a pure carbide (with a low oxygen content).

In other words, since oxycarbide of the form V(CₓO₁₋ₓ), x < 1, is easily formed, the preparation of vanadium carbide with a low oxygen content is not easily achieved.

Accordingly, the present applicant, through prolonged and diligent effort and various studies, has completed the present disclosure by obtaining a low-oxygen vanadium aluminum carbide MAX, which is formed with a reduced oxygen content by using both an inert gas and hydrogen gas in a carbothermal reaction of vanadium and aluminum, and a manufacturing method thereof.

In addition, the low-oxygen vanadium aluminum carbide MAX according to the present disclosure may be formed by:
mixing vanadium oxide, an aluminum compound, and a carbon compound;
preparing a bulk MAX with a large particle size by subjecting the mixed powder to a sintering heat treatment;
comminuting the bulk MAX to prepare a fine powder MAX; and then
subjecting the fine powder MAX to a carbothermal reduction heat treatment using the inert gas and hydrogen gas together, thereby forming the low-oxygen vanadium aluminum carbide MAX with reduced oxygen content.

At this time, the oxygen content may range from 10 ppm to 8,000 ppm.

Here, when the oxygen content is within the above range, an oxycarbide of the form V(CₓO₁₋ₓ) having a high oxygen content may not be easily formed.

At this time, the oxygen content may preferably range from 30 ppm to 8,000 ppm, and more preferably from 100 ppm to 7,000 ppm.

The low-oxygen vanadium aluminum carbide MAX may have a chemical formula of V₂AlC.

In addition, a molar ratio (B/A) of the aluminum compound (B) to the vanadium oxide (A) may range from 0.2 to 10, and
a molar ratio (C/A) of the carbon compound (C) to the vanadium oxide (A) may range from 0.2 to 10.

Here, when the molar ratio (B/A) of the aluminum compound (B) to the vanadium oxide (A) is within the above range, an oxycarbide of the form V(CₓO₁₋ₓ) having a high oxygen content may not be easily formed.

At this time, the molar ratio (B/A) of the aluminum compound (B) to the vanadium oxide (A) may preferably range from 0.5 to 9, and more preferably from 1 to 8.

In addition, when the molar ratio (C/A) of the carbon compound (C) to the vanadium oxide (A) is within the above range, an oxycarbide of the form V(CₓO₁₋ₓ) having a high oxygen content may not be easily formed.

At this time, the molar ratio (C/A) of the carbon compound (C) to the vanadium oxide (A) may preferably range from 0.5 to 9, and more preferably from 1 to 8.

The particle size of the mixed powder of the vanadium oxide, the aluminum compound, and the carbon compound may range from 2 nm to 50 µm.

Here, when the particle size of the mixed powder of the vanadium oxide, the aluminum compound, and the carbon compound is within the above range, the contact area of the vanadium oxide, the aluminum compound, and the carbon compound may be increased, thereby increasing the carbothermal reduction reaction rate.

At this time, the particle size of the mixed powder of the vanadium oxide, the aluminum compound, and the carbon compound may preferably range from 2 nm to 48 µm, and more preferably from 2 nm to 45 µm.

In addition, the vanadium oxide may be at least one selected from the group consisting of vanadium pentoxide (V₂O₅), sodium metavanadate (NaVO₃), vanadium trioxide (V₂O₃), vanadium oxychloride (VOCl₃), and ammonium metavanadate (H₄NVO₃).

The aluminum compound may be at least one selected from the group consisting of alumina (Al₂O₃), aluminum hydroxide (Al(OH)₃), aluminum chloride (AlCl₃), aluminum fluoride (AlF₃), and aluminum sulfate (Al₂(SO₄)₃).

In addition, the carbon compound may be at least one selected from the group consisting of industrial carbon powder, coke, coal, coal tar, activated carbon, natural graphite, artificial graphite, carbon black, acetylene black, Ketjen black, channel black, furnace black, lamp black, thermal black, industrial diamond, and carbon fiber.

Here, the carbon compound may further include biomass, which is at least one selected from the group consisting of coffee grounds, fallen leaves, and waste wood.

At this time, the carbon compound may further include a carbon-containing reducing gas, which is at least one selected from the group consisting of carbon monoxide, methane, and hydrocarbons.

Here, when vanadium (V) and aluminum (Al) are used as raw materials for synthesizing vanadium carbide, vanadium carbide is formed through a reaction of vanadium and aluminum with carbon, that is, through a carbothermal reduction reaction, as shown in Chemical Formula 1 below:

2V(s) + Al(l) + C(s) → V₂AlC(s) ----- (Chemical Formula 1)

In this process, theoretically, if the amount of carbon is adjusted to less than 1 mol relative to 2 mol of vanadium, a low-oxygen vanadium aluminum carbide MAX in the form of V₂AlC can be synthesized.

However, in an actual process, if the amount of carbon, which acts as a reducing agent, is reduced, the reaction rate for reduction decreases, and an oxycarbide of the form V(CₓO₁₋ₓ) having a high oxygen content is easily formed.

Furthermore, in order to form vanadium carbide, it is required not only carbon content adjustment but also a treatment to increase the rate of the carbothermal reduction reaction.

In the present disclosure, the reaction rate was increased by reducing the particle size of the raw materials, which are the mixed powders of vanadium oxide, alumina, and carbon, to the above-mentioned range through a comminution process. In addition, a low-oxygen vanadium aluminum carbide MAX with reduced oxygen content was synthesized by performing a carbothermal reduction reaction with heat treatment after introducing an inert gas and hydrogen gas to the mixed powders.

In addition, the volume ratio of the inert gas and the hydrogen gas may range from 10:1 to 1:10.

Here, when the volume ratio of the inert gas and the hydrogen gas is within the above range, a low-oxygen vanadium aluminum carbide MAX with a reduced oxygen content can be synthesized.

In this case, the volume ratio of the inert gas and the hydrogen gas is preferably from 10:2 to 2:10, and more preferably from 10:3 to 3:10.

Furthermore, the sintering heat treatment temperature may range from 800 °C to 1600 °C, and the sintering heat treatment time may range from 10 minutes to 24 hours.

In addition, a particle size of the bulk MAX may range from 50 nm to 100 µm, and a particle size of the fine powder MAX may range from 2 nm to 20 µm.

Here, when the sintering heat treatment temperature is within the above range, the particle size of the bulk MAX may range from 50 nm to 100 µm.

In this case, the sintering heat treatment temperature may be preferably from 850 °C to 1600 °C, and more preferably from 900 °C to 1600 °C.

Furthermore, when the sintering heat treatment time is within the above range, the particle size of the bulk MAX may range from 50 nm to 100 µm.

In this case, the sintering heat treatment time may be preferably from 20 minutes to 24 hours, and more preferably from 30 minutes to 24 hours.

In addition, the carbothermal reduction reaction may be performed using both the inert gas and the hydrogen gas, thereby manufacturing a low-oxygen vanadium aluminum carbide MAX.

### Method for manufacturing a low-oxygen vanadium aluminum carbide max

The present disclosure provides a method for manufacturing a low-oxygen vanadium aluminum carbide MAX, which is formed with a reduced oxygen content by using both an inert gas and hydrogen gas in a carbothermal reaction of vanadium and aluminum.

The present disclosure provides a method for manufacturing a low-oxygen vanadium aluminum carbide MAX, comprising the steps of:
(a-1) preparing a mixed powder by mixing vanadium oxide, an aluminum compound, and a carbon compound;
(a-2) preparing a bulk MAX by subjecting the mixed powder to a sintering heat treatment;
(a-3) preparing a fine powder MAX by comminuting the bulk MAX; and
(a-4) preparing a low-oxygen vanadium aluminum carbide MAX with reduced oxygen content by subjecting the fine powder MAX to a carbothermal reaction heat treatment using both an inert gas and hydrogen gas under an atmosphere of air, vacuum, nitrogen, or argon in a high-temperature synthesis furnace or a super kantal furnace.

The present disclosure provides a method for manufacturing a low-oxygen vanadium aluminum carbide MAX, which is formed with a reduced oxygen content by using both an inert gas and hydrogen gas in a carbothermal reaction of vanadium and aluminum, thereby ensuring excellent process stability and enabling mass production in an economical manner.

In addition, in step (a-1) of preparing a mixed powder by mixing vanadium oxide, an aluminum compound, and a carbon compound,
a mixing ratio of the vanadium oxide, the aluminum compound, and the carbon compound may range from 1 : 0.2-0.7 : 0.1-0.5 by weight.

Here, when the mixing ratio of the vanadium oxide, the aluminum compound, and the carbon compound is within the above weight ratio range, an oxycarbide in the form of (CₓO₁₋ₓ) having a high oxygen content may not be easily formed.

In this case, the mixing ratio of the vanadium oxide, the aluminum compound, and the carbon compound may be preferably 1 : 0.3-0.7 : 0.2-0.5 by weight, and more preferably 1 : 0.3-0.6 : 0.2-0.4 by weight.

And, in step (a-2) of preparing a bulk MAX by subjecting the mixed powder to a sintering heat treatment,
a temperature of the sintering heat treatment may range from 800 °C to 1600 °C, and
a time for the sintering heat treatment may range from 10 minutes to 24 hours.

In addition, in step (a-3) of comminuting the bulk MAX to prepare a fine powder,
a particle size of the bulk MAX may range from 50 nm to 100 µm, and
a particle size of the fine powder may range from 2 nm to 20 µm.

Here, when the sintering heat treatment temperature is within the above range, the particle size of the bulk MAX may range from 50 nm to 100 µm.

In this case, the temperature of the sintering heat treatment may be preferably from 850 °C to 1600 °C, and more preferably from 900 °C to 1600 °C.

Furthermore, when the sintering heat treatment time is within the above range, the particle size of the bulk MAX may range from 50 nm to 100 µm.

In this case, the time for the sintering heat treatment may be preferably from 20 minutes to 24 hours, and more preferably from 30 minutes to 24 hours.

In addition, in step (a-4) of preparing a low-oxygen vanadium aluminum carbide MAX with reduced oxygen content by subjecting the fine powder MAX to a carbothermal reaction heat treatment using both an inert gas and hydrogen gas under an atmosphere of air, vacuum, nitrogen, or argon in a high-temperature synthesis furnace or a super kantal furnace,
a temperature of the carbothermal reaction heat treatment using both the inert gas and the hydrogen gas may range from 500 °C to 1100 °C, and
a time for the carbothermal reaction heat treatment may range from 10 minutes to 24 hours.

Here, the carbothermal reaction heat treatment may be a process of heat-treating the fine powder MAX in a high-temperature synthesis furnace or a super kantal furnace under an atmosphere of air, vacuum, nitrogen, or argon while using both an inert gas and hydrogen gas.

Here, when the temperature of the carbothermal reaction heat treatment using both the inert gas and the hydrogen gas is within the above range, the low-oxygen characteristics and manufacturing efficiency of the low-oxygen vanadium aluminum carbide MAX may be excellent.

In this case, the temperature of the carbothermal reaction heat treatment using both the inert gas and the hydrogen gas may be preferably from 550 °C to 1050 °C, and more preferably from 600 °C to 1000 °C.

Furthermore, when the time for the carbothermal reaction heat treatment using both the inert gas and the hydrogen gas is within the above range, the low-oxygen characteristics and manufacturing efficiency of the low-oxygen vanadium aluminum carbide MAX may be excellent.

In this case, the time for the carbothermal reaction heat treatment using both the inert gas and the hydrogen gas is preferably from 20 minutes to 24 hours, and more preferably from 30 minutes to 24 hours.

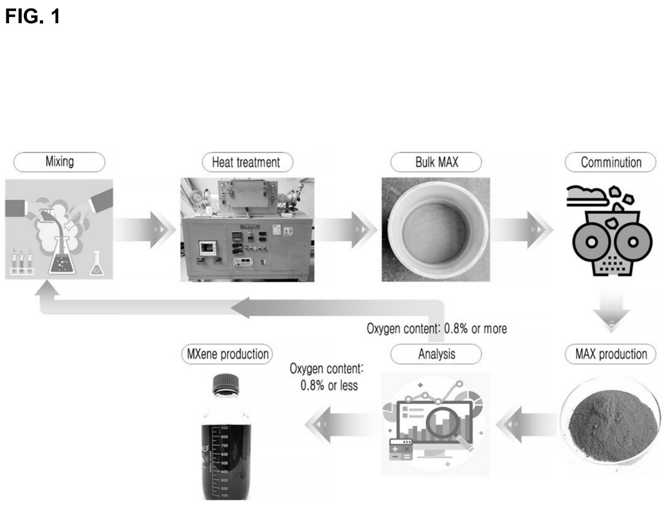

FIG. 1 is a schematic diagram illustrating a method for manufacturing a low-oxygen vanadium aluminum carbide MAX formed with reduced oxygen content by using both an inert gas and hydrogen gas in a carbothermal reaction of vanadium and aluminum according to an exemplary embodiment of the present disclosure.

Referring to FIG. 1, a mixed powder is prepared by mixing (blending) vanadium oxide, an aluminum compound, and a carbon compound.

Thereafter, the mixed powder is subjected to a sintering heat treatment to prepare a bulk MAX.

Then, the bulk MAX is comminuted to prepare a fine powder MAX.

Subsequently, the fine powder MAX is subjected to a carbothermal reaction heat treatment using both an inert gas and hydrogen gas under an atmosphere of air, vacuum, nitrogen, or argon in a high-temperature synthesis furnace or a super kantal furnace, thereby producing a low-oxygen vanadium aluminum carbide MAX with reduced oxygen content.

Next, when the oxygen content analyzed from the low-oxygen vanadium aluminum carbide MAX is 0.8 wt% or less, MAXene is produced.

Here, if the oxygen content analyzed from the low-oxygen vanadium aluminum carbide MAX exceeds 0.8 wt%, the vanadium aluminum carbide MAX is returned to the mixed powder preparation process, and the low-oxygen vanadium aluminum carbide MAX is manufactured again.

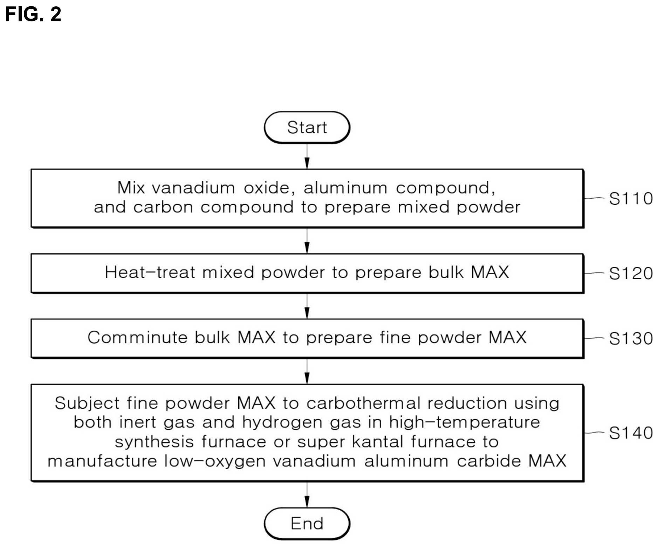

FIG. 2 is a process flow diagram illustrating a method for manufacturing a low-oxygen vanadium aluminum carbide MAX according to an exemplary embodiment of the present disclosure.

Referring to FIG. 2, at first, a mixed powder is prepared by mixing vanadium oxide, an aluminum compound, and a carbon compound (S110).

Thereafter, the mixed powder is subjected to a sintering heat treatment to prepare a bulk MAX (S120).

Then, the bulk MAX is comminuted to prepare a fine powder MAX (S130).

Subsequently, the fine powder MAX is subjected to a carbothermal reaction heat treatment using both an inert gas and hydrogen gas under an atmosphere of air, vacuum, nitrogen, or argon in a high-temperature synthesis furnace or a super kantal furnace, thereby producing a low-oxygen vanadium aluminum carbide MAX with reduced oxygen content (S140).

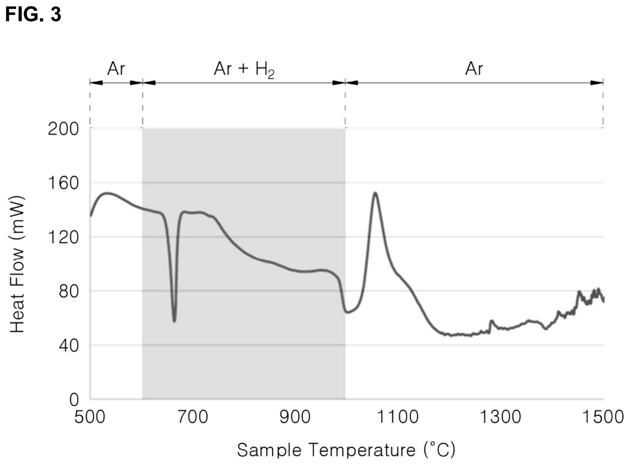

FIG. 3 is a graph showing the DSC analysis result of a 2V + Al + C mixture and the gas injection section according to an exemplary embodiment of the present disclosure.

Referring to FIG. 3, the temperature range of 600 °C to 1000 °C, in which the reaction occurs most actively, is selected as the hydrogen reduction gas injection section. By injecting hydrogen, which can rapidly reduce oxygen within this reaction range, the oxygen content of the final V₂AlC MAX can be reduced.

### Use of low-oxygen vanadium aluminum carbide max

The present disclosure provides a use of a low-oxygen vanadium aluminum carbide MAX formed with reduced oxygen content by using both an inert gas and hydrogen gas in the carbothermal reaction of vanadium and aluminum.

The present disclosure can provide the low-oxygen vanadium aluminum carbide MAX whose use is as a MAX phase precursor, a raw material for cemented carbide, a catalyst, or a semiconductor material.

### Low-oxygen vanadium aluminum carbide max with an oxygen content ranging from 10 ppm to 8,000 ppm

The present disclosure provides a low-oxygen vanadium aluminum carbide MAX having an oxygen content ranging from 10 ppm to 8,000 ppm, which is manufactured by the method for manufacturing a low-oxygen vanadium aluminum carbide MAX.

The present disclosure provides a low-oxygen vanadium aluminum carbide MAX having an oxygen content ranging from 10 ppm to 8,000 ppm, which is manufactured by the method for manufacturing a low-oxygen vanadium aluminum carbide MAX.

Since the present disclosure provides a low-oxygen vanadium aluminum carbide MAX having an oxygen content ranging from 10 ppm to 8,000 ppm, which is manufactured by the method for manufacturing a low-oxygen vanadium aluminum carbide MAX, the low-oxygen vanadium aluminum carbide MAX has a low oxygen content, a small particle size, excellent physical properties, and can be used in various applications such as a MAX phase precursor, a raw material for cemented carbide, a catalyst, or a semiconductor material.

The present disclosure provides a low-oxygen vanadium aluminum carbide MAX, the use of which, manufactured by the method for manufacturing a low-oxygen vanadium aluminum carbide MAX, is as a MAX phase precursor, a raw material for cemented carbide, a catalyst, or a semiconductor material.

Hereinafter, the present disclosure will be described in more detail through exemplary embodiments. However, the following exemplary embodiments are provided only for illustrating the present disclosure in greater detail, and the scope of the present disclosure is not limited to these exemplary embodiments. The exemplary embodiments may be appropriately modified or altered by those skilled in the art within the scope of the present disclosure.

### <Exemplary embodiments>

### <Exemplary embodiments 1 to 8> Manufacture of low-oxygen vanadium aluminum carbide max

A mixed powder was prepared by mixing vanadium oxide, an aluminum compound, and a carbon compound according to the components and contents shown in Table 1 below.

Thereafter, the mixed powder was introduced into a heat treatment apparatus, and a bulk MAX was prepared under the sintering heat treatment conditions shown in Table 1.

Then, the bulk MAX was comminuted in a comminuting apparatus to prepare a fine powder MAX having the particle size shown in Table 1.

Subsequently, the fine powder MAX was subjected to a carbothermal reaction heat treatment using both an inert gas and hydrogen gas under an atmosphere of air, vacuum, nitrogen, or argon in a high-temperature synthesis furnace or a super kantal furnace, under the carbothermal reaction heat treatment conditions shown in Table 1, to manufacture a low-oxygen vanadium aluminum carbide MAX with reduced oxygen content.

### <Comparative example> Manufacture of vanadium carbide

Except that the carbothermal reaction heat treatment was performed using both an inert gas and hydrogen gas together in the exemplary embodiment 1, vanadium carbide of the comparative example was prepared in the same manner as described in the exemplary embodiment 1.

**[Table 1]**

| | Exempl ary embodi ment 1 | Exempl ary embodi ment 2 | Exempl ary embodi ment 3 | Exempl ary embodi ment 4 | Exempl ary embodi ment 5 | Exempl ary embodi ment 6 | Exempl ary embodi ment 7 | Exempl ary embodi ment 8 | Comp arative examp le |
|---|---|---|---|---|---|---|---|---|---|
| Vanadium oxide (A) | Vanadiu m pentoxi de (V₂O₅) | Vanadiu m pentoxi de (V₂O₅) | Sodium metavan adate (NaVO₃ ) | Vanadiu m trioxide (V₂O₃) | Vanadiu m oxychlo ride (VOCl₃) | Ammon ium metavan adate (H₄NV O₃) | Vanadiu m pentoxi de (V₂O₅) | Vanadiu m pentoxi de (V₂O₅) | Vanadi um pentox ide (V₂O₅) |
| Aluminum compound (B) | Alumin um hydroxi de (Al(OH)₃) | Alumin um hydroxi de (Al(OH)₃) | Alumin um hydroxi de (Al(OH)₃) | Alumin um hydroxi de (Al(OH)₃) | Alumin um fluoride (AlF₃) | Alumin um sulfate (Al₂(SO ₄)₃) | Alumin a (Al₂O₃) | Alumin um chloride (AlCl₃) | Alumi num hydro xide Al(OH)₃) |
| Carbon compound (C) | Industri al carbon powder | Industri al carbon powder | Industri al carbon powder | Industri al carbon powder | Natural graphite | Artificia l graphite | Coke | Coal | Indust rial carbon powde r |
| A:B:C (weight ratio) | 1:0.5:0. 3 | 1:0.5:0. 3 | 1:0.5:0. 3 | 1:0.5:0. 3 | 1:0.2:0. 5 | 1:0.7:0. 5 | 1:0.4:0. 4 | 1:0.5:0. 5 | 1:0.5: 0.3 |
| Average particle size of mixed powder | 10 *µ*m | 10 *µ*m | 10 *µ*m | 10 *µ*m | 0.2 *µ*m | 0.05 *µ*m | 20 nm | 30 *µ*m | 10 *µ*m |
| Average particle size of bulk MAX | 35 *µ*m | 35 *µ*m | 35 *µ*m | 35 *µ*m | 3 *µ*m | 0.1 *µ*m | 50 nm | 100 *µ*m | 35 *µ*m |
| Average particle size of fine powder MAX | 5 *µ*m | 5 *µ*m | 5 *µ*m | 5 *µ*m | 0.1*µ*m | 50 nm | 10 nm | 20 *µ*m | 5 *µ*m |
| Sintering heat treatment temperature (°C) | 1000 | 1000 | 1000 | 1000 | 1100 | 900 | 1400 | 1600 | 1000 |
| Sintering heat treatment time | 1 hour | 1 hour | 1 hour | 1 hour | 3 hours | 6 hours | 10 min | 12 hours | 1 hour |
| Gas condition in carbothermal reduction reactor | Vacuum | Vacuum | Vacuum | Vacuum | Vacuum | Air | Nitroge n | Argon | Vacuu m |
| Carbothermal reduction reactor | High-tempera ture synthesi s furnace | High-tempera ture synthesi s furnace | High-tempera ture synthesi s furnace | High-tempera ture synthesi s furnace | High-tempera ture synthesi s furnace | Super Kantal furnace | Super Kantal furnace | Super Kantal furnace | High-temper ature synthe sis furnac e |
| Type of inert gas | Argon | Argon | Argon | Argon | Nitroge n | Nitroge n | Nitroge n | Argon | - |
| Inert gas : Hydrogen (cc) | 500:0 | 400:100 | 300:200 | 200:300 | 400:100 | 300:200 | 200:300 | 250:250 | - |
| Carbothermal reaction heat treatment temperature (°C) | 600~10 00 | 600~10 00 | 600~10 00 | 600~10 00 | 500~11 00 | 500~11 00 | 500~11 00 | 500~11 00 | 600~1 000 |
| Carbothermal reaction heat treatment time | 3 hours | 3 hours | 3 hours | 3 hours | 10 min | 9 hours | 12 hours | 24 hours | 3 hours |
| Oxygen content of low-oxygen vanadium aluminum carbide MAX (ppm) | 4200 | 4100 | 3800 | 3400 | - | - | - | - | 12000 |

Referring to Table 1, the low-oxygen vanadium aluminum carbide MAX of the exemplary embodiments 1 to 4 had an oxygen content ranging from 3400 ppm to 4200 ppm, which was significantly lower than the oxygen content of 12,000 ppm in the vanadium carbide of the comparative example.

Here, the low-oxygen vanadium aluminum carbide MAX of the exemplary embodiments 1 to 4 was shown to contain a relatively low amount of oxygen.

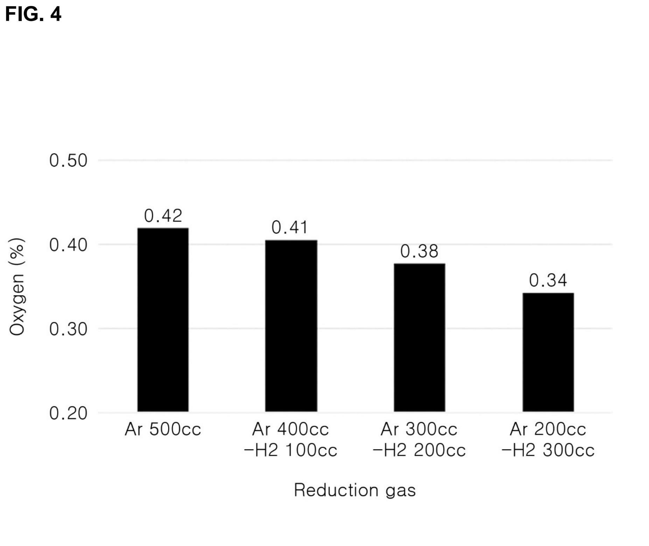

FIG. 4 is a graph showing the oxygen content of a low-oxygen vanadium aluminum carbide MAX according to the exemplary embodiments 1 to 4 of the present disclosure.

Referring to FIG. 4, the low-oxygen vanadium aluminum carbide MAX of the exemplary embodiments 1 to 4 was confirmed to have an oxygen content ranging from 3400 ppm to 4200 ppm.

In the above, exemplary embodiments of low-oxygen vanadium aluminum carbide max and method for manufacturing the low-oxygen vanadium aluminum carbide max according to the present disclosure have been described. Moreover, it will be appreciated that various modifications to these exemplary embodiments are possible without departing from the scope of the present disclosure.

The scope of the present disclosure should therefore not be limited to those exemplary embodiments described above, but should be defined by the following claims and their equivalents.

In other words, the foregoing exemplary embodiments are to be understood as illustrative rather than restrictive in all respects, and the scope of the present disclosure is indicated by the following claims rather than the detailed description. All modifications or variations derived from the meaning, scope, and equivalent concepts of the claims should be interpreted as being included within the scope of the present disclosure.

### [Industrial Applicability]

The present disclosure can be utilized in a method for manufacturing a vanadium aluminum carbide MAX.

## Claims

1. A low-oxygen vanadium aluminum carbide MAX, comprising:
vanadium;
aluminum; and
carbon,
wherein the low-oxygen vanadium aluminum carbide MAX is formed by using both an inert gas and hydrogen gas in a carbothermal reaction of the vanadium and the aluminum.

2. The low-oxygen vanadium aluminum carbide MAX of claim 1,
wherein the low-oxygen vanadium aluminum carbide MAX is formed by:
mixing vanadium oxide, an aluminum compound, and a carbon compound to prepare a mixed powder;
subjecting the mixed powder to a sintering heat treatment to prepare a bulk MAX having a large particle size;
comminuting the bulk MAX to prepare a fine powder MAX; and
subjecting the fine powder MAX to a carbothermal reaction heat treatment using both an inert gas and hydrogen gas such that the low-oxygen vanadium aluminum carbide MAX is formed with reduced oxygen content.

3. The low-oxygen vanadium aluminum carbide MAX of claim 1,
wherein the oxygen content ranges from 10 ppm to 8,000 ppm.

4. The low-oxygen vanadium aluminum carbide MAX of claim 1,
wherein the low-oxygen vanadium aluminum carbide MAX has a chemical formula of V₂AlC.

5. The low-oxygen vanadium aluminum carbide MAX of claim 2,
wherein a molar ratio (B/A) of the aluminum compound (B) to the vanadium oxide (A) ranges from 0.2 to 10, and
wherein a molar ratio (C/A) of the carbon compound (C) to the vanadium oxide (A) ranges from 0.2 to 10.

6. The low-oxygen vanadium aluminum carbide MAX of claim 2,
wherein a particle size of the mixed powder of the vanadium oxide, the aluminum compound, and the carbon compound ranges from 2 nm to 50 µm.

7. The low-oxygen vanadium aluminum carbide MAX of claim 2,
wherein the vanadium oxide is at least one selected from the group consisting of vanadium pentoxide (V₂O₅), sodium metavanadate (NaVO₃), vanadium trioxide (V₂O₃), vanadium oxychloride (VOCl₃), and ammonium metavanadate (H₄NVO₃).

8. The low-oxygen vanadium aluminum carbide MAX of claim 2,
wherein the aluminum compound is at least one selected from the group consisting of alumina (Al₂O₃), aluminum hydroxide (Al(OH)₃), aluminum chloride (AlCl₃), aluminum fluoride (AlF₃), and aluminum sulfate (Al₂(SO₄)₃).

9. The low-oxygen vanadium aluminum carbide MAX of claim 2,
wherein the carbon compound is at least one selected from the group consisting of industrial carbon powder, coke, coal, coal tar, activated carbon, natural graphite, artificial graphite, carbon black, acetylene black, Ketjen black, channel black, furnace black, lamp black, thermal black, industrial diamond, and carbon fiber.

10. The low-oxygen vanadium aluminum carbide MAX of claim 1 or 2,
wherein a volume ratio of the inert gas to the hydrogen gas ranges from 10:1 to 1:10.

11. The low-oxygen vanadium aluminum carbide MAX of claim 2,
wherein a temperature of the sintering heat treatment ranges from 800 °C to 1600 °C, and
wherein a time for the sintering heat treatment ranges from 10 minutes to 24 hours.

12. The low-oxygen vanadium aluminum carbide MAX of claim 2,
wherein a particle size of the bulk MAX ranges from 50 nm to 100 µm, and
wherein a particle size of the fine powder MAX ranges from 2 nm to 20 µm.

13. A method for manufacturing a low-oxygen vanadium aluminum carbide MAX, comprising the steps of:
(a-1) preparing a mixed powder by mixing vanadium oxide, an aluminum compound, and a carbon compound;
(a-2) preparing a bulk MAX by subjecting the mixed powder to a sintering heat treatment;
(a-3) preparing a fine powder MAX by comminuting the bulk MAX; and
(a-4) preparing a low-oxygen vanadium aluminum carbide MAX with reduced oxygen content by subjecting the fine powder MAX to a carbothermal reaction heat treatment using both an inert gas and hydrogen gas under an atmosphere of air, vacuum, nitrogen, or argon in a high-temperature synthesis furnace or a super kantal furnace.

14. The method for manufacturing a low-oxygen vanadium aluminum carbide MAX of claim 13,
wherein, in step (a-1) of preparing a mixed powder by mixing vanadium oxide, an aluminum compound, and a carbon compound,
a mixing ratio of the vanadium oxide, the aluminum compound, and the carbon compound is 1 : 0.2-0.7 : 0.1-0.5 by weight.

15. The method for manufacturing a low-oxygen vanadium aluminum carbide MAX of claim 13,
wherein, in step (a-2) of preparing a bulk MAX by subjecting the mixed powder to a sintering heat treatment,
a temperature of the sintering heat treatment ranges from 800 °C to 1600 °C, and
a time for the sintering heat treatment ranges from 10 minutes to 24 hours.

16. The method for manufacturing a low-oxygen vanadium aluminum carbide MAX of claim 13,
wherein, in step (a-3) of preparing a fine powder MAX by comminuting the bulk MAX,
a particle size of the bulk MAX ranges from 50 nm to 100 µm, and
a particle size of the fine powder MAX ranges from 2 nm to 20 µm.

17. The method for manufacturing a low-oxygen vanadium aluminum carbide MAX of claim 13,
wherein, in step (a-4) of preparing a low-oxygen vanadium aluminum carbide MAX with reduced oxygen content by subjecting the fine powder MAX to a carbothermal reaction heat treatment using both an inert gas and hydrogen gas under an atmosphere of air, vacuum, nitrogen, or argon in a high-temperature synthesis furnace or a super kantal furnace,
a temperature of the carbothermal reaction heat treatment using both the inert gas and the hydrogen gas ranges from 500 °C to 1100 °C, and
a time for the carbothermal reaction heat treatment ranges from 10 minutes to 24 hours.

18. The use of the low-oxygen vanadium aluminum carbide MAX according to any one of claims 1 to 12,
as a MAX phase precursor, a raw material for cemented carbide, a catalyst, or a semiconductor material.

19. The low-oxygen vanadium aluminum carbide MAX manufactured by the method for manufacturing a low-oxygen vanadium aluminum carbide MAX according to any one of claims 13 to 17,
wherein an oxygen content of the low-oxygen vanadium aluminum carbide MAX ranges from 10 ppm to 8,000 ppm.

20. The use of the low-oxygen vanadium aluminum carbide MAX manufactured by the method for manufacturing a low-oxygen vanadium aluminum carbide MAX according to any one of claims 13 to 17,
as a MAX phase precursor, a raw material for cemented carbide, a catalyst, or a semiconductor material.

## Amended claims

### Amended claims under Art. 19.1 PCT

1. A low-oxygen vanadium aluminum carbide MAX, comprising:
vanadium;
aluminum; and
carbon,
wherein the low-oxygen vanadium aluminum carbide MAX is formed by using both an inert gas and hydrogen gas in a carbothermal reaction of the vanadium and the aluminum.

2. The low-oxygen vanadium aluminum carbide MAX of claim 1,
wherein the low-oxygen vanadium aluminum carbide MAX is formed by:
mixing vanadium oxide, an aluminum compound, and a carbon compound to prepare a mixed powder;
subjecting the mixed powder to a sintering heat treatment to prepare a bulk MAX having a large particle size;
comminuting the bulk MAX to prepare a fine powder MAX; and
subjecting the fine powder MAX to a carbothermal reaction heat treatment using both an inert gas and hydrogen gas such that the low-oxygen vanadium aluminum carbide MAX is formed with reduced oxygen content.

3. The low-oxygen vanadium aluminum carbide MAX of claim 1,
wherein the oxygen content ranges from 10 ppm to 8,000 ppm.

4. The low-oxygen vanadium aluminum carbide MAX of claim 1,
wherein the low-oxygen vanadium aluminum carbide MAX has a chemical formula of V₂AlC.

5. The low-oxygen vanadium aluminum carbide MAX of claim 2,
wherein a molar ratio (B/A) of the aluminum compound (B) to the vanadium oxide (A) ranges from 0.2 to 10, and
wherein a molar ratio (C/A) of the carbon compound (C) to the vanadium oxide (A) ranges from 0.2 to 10.

6. The low-oxygen vanadium aluminum carbide MAX of claim 2,
wherein a particle size of the mixed powder of the vanadium oxide, the aluminum compound, and the carbon compound ranges from 2 nm to 50 µm.

7. The low-oxygen vanadium aluminum carbide MAX of claim 2,
wherein the vanadium oxide is at least one selected from the group consisting of vanadium pentoxide (V₂O₅), sodium metavanadate (NaVO₃), vanadium trioxide (V₂O₃), vanadium oxychloride (VOCl₃), and ammonium metavanadate (H₄NVO₃).

8. The low-oxygen vanadium aluminum carbide MAX of claim 2,
wherein the aluminum compound is at least one selected from the group consisting of alumina (Al₂O₃), aluminum hydroxide (Al(OH)₃), aluminum chloride (AlCl₃), aluminum fluoride (AlF₃), and aluminum sulfate (Al₂(SO₄)₃).

9. The low-oxygen vanadium aluminum carbide MAX of claim 2,
wherein the carbon compound is at least one selected from the group consisting of industrial carbon powder, coke, coal, coal tar, activated carbon, natural graphite, artificial graphite, carbon black, acetylene black, Ketjen black, channel black, furnace black, lamp black, thermal black, industrial diamond, and carbon fiber.

10. The low-oxygen vanadium aluminum carbide MAX of claim 1,
wherein a volume ratio of the inert gas to the hydrogen gas ranges from 10:1 to 1:10.

11. The low-oxygen vanadium aluminum carbide MAX of claim 2,
wherein a temperature of the sintering heat treatment ranges from 800 °C to 1600 °C, and
wherein a time for the sintering heat treatment ranges from 10 minutes to 24 hours.

12. The low-oxygen vanadium aluminum carbide MAX of claim 2,
wherein a particle size of the bulk MAX ranges from 50 nm to 100 µm, and
wherein a particle size of the fine powder MAX ranges from 2 nm to 20 µm.

13. A method for manufacturing a low-oxygen vanadium aluminum carbide MAX, comprising the steps of:
(a-1) preparing a mixed powder by mixing vanadium oxide, an aluminum compound, and a carbon compound;
(a-2) preparing a bulk MAX by subjecting the mixed powder to a sintering heat treatment;
(a-3) preparing a fine powder MAX by comminuting the bulk MAX; and
(a-4) preparing a low-oxygen vanadium aluminum carbide MAX with reduced oxygen content by subjecting the fine powder MAX to a carbothermal reaction heat treatment using both an inert gas and hydrogen gas under an atmosphere of air, vacuum, nitrogen, or argon in a high-temperature synthesis furnace or a super kantal furnace.

14. The method for manufacturing a low-oxygen vanadium aluminum carbide MAX of claim 13,
wherein, in step (a-1) of preparing a mixed powder by mixing vanadium oxide, an aluminum compound, and a carbon compound,
a mixing ratio of the vanadium oxide, the aluminum compound, and the carbon compound is 1 : 0.2-0.7 : 0.1-0.5 by weight.

15. The method for manufacturing a low-oxygen vanadium aluminum carbide MAX of claim 13,
wherein, in step (a-2) of preparing a bulk MAX by subjecting the mixed powder to a sintering heat treatment,
a temperature of the sintering heat treatment ranges from 800 °C to 1600 °C, and
a time for the sintering heat treatment ranges from 10 minutes to 24 hours.

16. The method for manufacturing a low-oxygen vanadium aluminum carbide MAX of claim 13,
wherein, in step (a-3) of preparing a fine powder MAX by comminuting the bulk MAX,
a particle size of the bulk MAX ranges from 50 nm to 100 µm, and
a particle size of the fine powder MAX ranges from 2 nm to 20 µm.

17. The method for manufacturing a low-oxygen vanadium aluminum carbide MAX of claim 13,
wherein, in step (a-4) of preparing a low-oxygen vanadium aluminum carbide MAX with reduced oxygen content by subjecting the fine powder MAX to a carbothermal reaction heat treatment using both an inert gas and hydrogen gas under an atmosphere of air, vacuum, nitrogen, or argon in a high-temperature synthesis furnace or a super kantal furnace,
a temperature of the carbothermal reaction heat treatment using both the inert gas and the hydrogen gas ranges from 500 °C to 1100 °C, and
a time for the carbothermal reaction heat treatment ranges from 10 minutes to 24 hours.

18. The use of the low-oxygen vanadium aluminum carbide MAX according to any one of claims 1 to 12,
as a MAX phase precursor, a raw material for cemented carbide, a catalyst, or a semiconductor material.

19. The low-oxygen vanadium aluminum carbide MAX manufactured by the method for manufacturing a low-oxygen vanadium aluminum carbide MAX according to any one of claims 13 to 17,
wherein an oxygen content of the low-oxygen vanadium aluminum carbide MAX ranges from 10 ppm to 8,000 ppm.

20. The use of the low-oxygen vanadium aluminum carbide MAX manufactured by the method for manufacturing a low-oxygen vanadium aluminum carbide MAX according to any one of claims 13 to 17,
as a MAX phase precursor, a raw material for cemented carbide, a catalyst, or a semiconductor material.
